# EUROPEAN PATENT SPECIFICATION

(11) **EP 1 055 563 B1**
(45) Date of publication and mention of the grant of the patent: **16.04.2003**
(21) Application number: 99109267.7
(22) Date of filing: 27.05.1999
(51) Int. Cl.: B60R 11/02

(54) **Improved hand-free holding apparatus for mobile telephone set**
Verbesserte Freisprech-Handapparathalterung für ein Mobiltelefon
Dispositif-support main-libre amélioré pour téléphone mobile

(43) Date of publication of application: 29.11.2000
(73) Proprietor: Eagle FAN, Chupei City, Hsinchu, Taiwan 302 (TW)
(72) Inventor: Eagle FAN, Chupei City, Hsinchu, Taiwan 302 (TW)
(74) Representative: Müller-Boré & Partner Patentanwälte

(56) References cited:
- WO-A-95/34156
- WO-A-97/14582
- WO-A-98/20661
- DE-U- 9 402 058
- DE-U- 29 617 299
- GB-A- 2 258 786
- GB-A- 2 304 487
- US-A- 5 471 530

## Description

### Field of the Invention

The present invention relates to an improved hand-free holding apparatus for mobile telephone set characterized by functions of voice gathering, audio power amplification and firm holding.

### Background of the Invention

DE 94 02 058 U shows a mobile phone set adapter according to the preamble of claim 1.

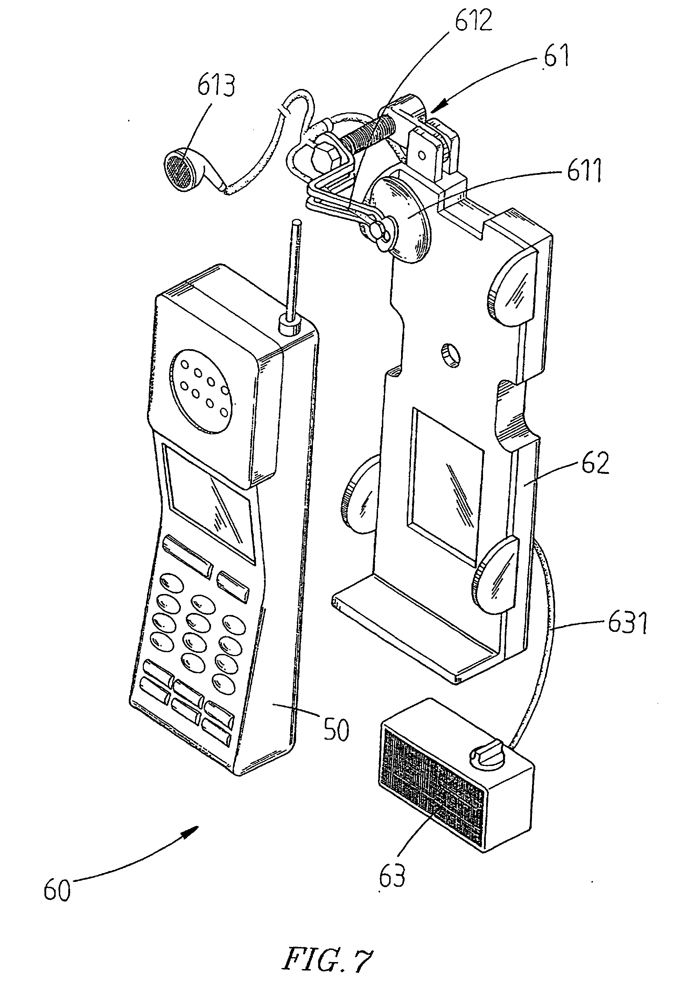

A conventional hand-free holding apparatus for mobile telephone set shown in Fig.7 is an utility model of Application No.85216021 in Taiwan, in which a holding apparatus 60 contains a voice gatherer 61, a holder 62 and an audio power amplifier 63, the voice gatherer 61 has a cup 611 attached to an elastic piece 612 and pressed against a receiver of mobile telephone set 50 by force from the elastic piece 612, the gathered voice is transmitted to an audio power amplifier 63 through an acoustic conduit 631, the voice gatherer 61 which is connected with an earphone 613 is fixed on the holder 62 to form the hand-free holding apparatus 60, however, it is not convenient to use and undesired interference will occur in such an apparatus; therefore, the inventor develops an improved hand-free holding apparatus for mobile telephone set with simplified construction, easy application and better flexibility by means of his long term accumulated experience in that field.

### Summary of the Invention

The major object of the present invention is to provided an improved hand-free holding apparatus for mobile telephone set with functions of acoustic amplification, voice gathering and telephone set holding, which contains a power adapter, a voice gatherer and a holder that positions the telephone set at a proper point in car and has the voice gatherer fixed on it, a cup set of the voice gatherer can be adjusted to be against the telephone receiver from which the gathered voice is transmitted through a microphone and a cable to an audio power amplifier connected to the power adapter, furthermore, an earphone is provided for private receiving.

Another object of the present invention is to disclose an improved hand-free holding apparatus for mobile telephone set with interference control, in which an acoustic conduit with an internal spring inserted in it for inhibition of sound wave oscillation and interference due to it is provided between the microphone and the cup set of the voice gatherer to give a clear voice.

A further object of the present invention is to show an improved hand-free holding apparatus for mobile telephone set with effective voice receiving, in which the cup set consists of a larger outer cup that serves to isolate the external noise and undesired sound wave and a smaller inner cup that serves to direct the voice into the acoustic conduit directly.

The object, characteristics and functions of the present invention can be best described in detail in conjunction with the accompanying drawings and the following embodiment hereinafter:

### Brief Description of the Drawings

Fig. 1 is an exploded view of the present invention;
Fig. 2 is an exploded view of a voice gatherer of the present invention;
Fig. 3 is a schematic view of a voice gatherer of the present invention;
Fig. 4 is a schematic assembly view of the voice gatherer shown in Fig. 3;
Fig. 5 is a general assembly view of the present invention;
Fig. 6 is an example of embodiment of the present invention;
Fig. 7 is a schematic view of a conventional hand-free holding apparatus.

### Detailed Description of the Invention

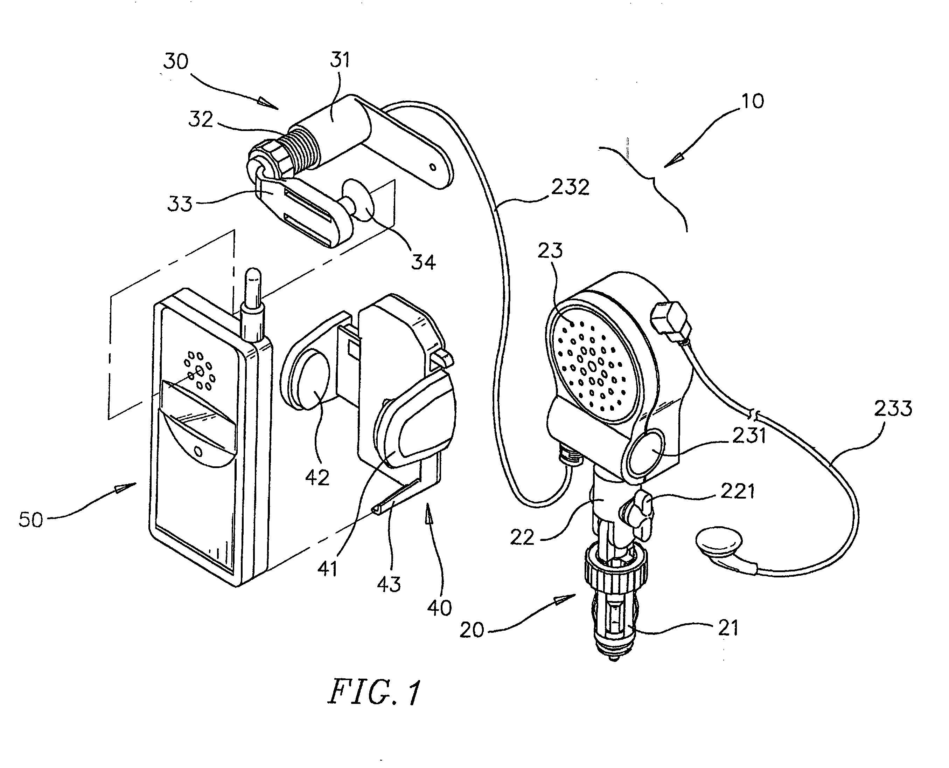

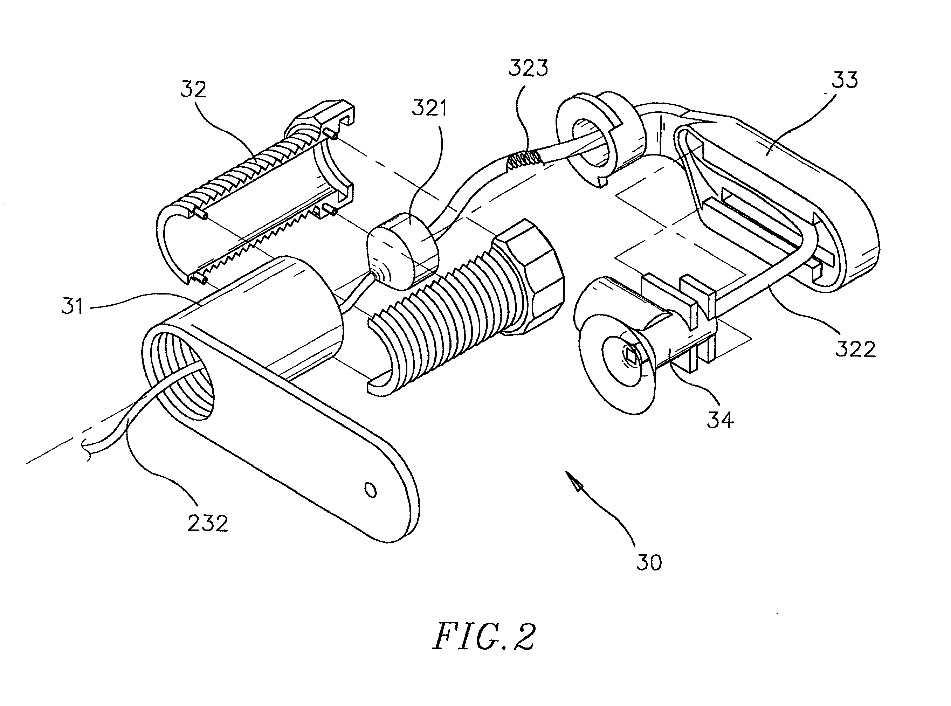

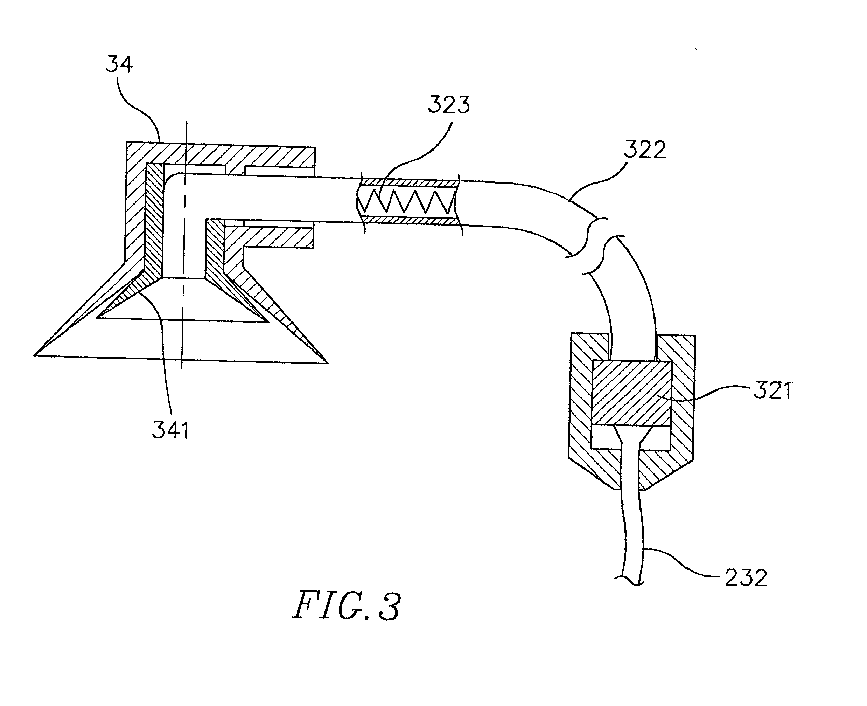

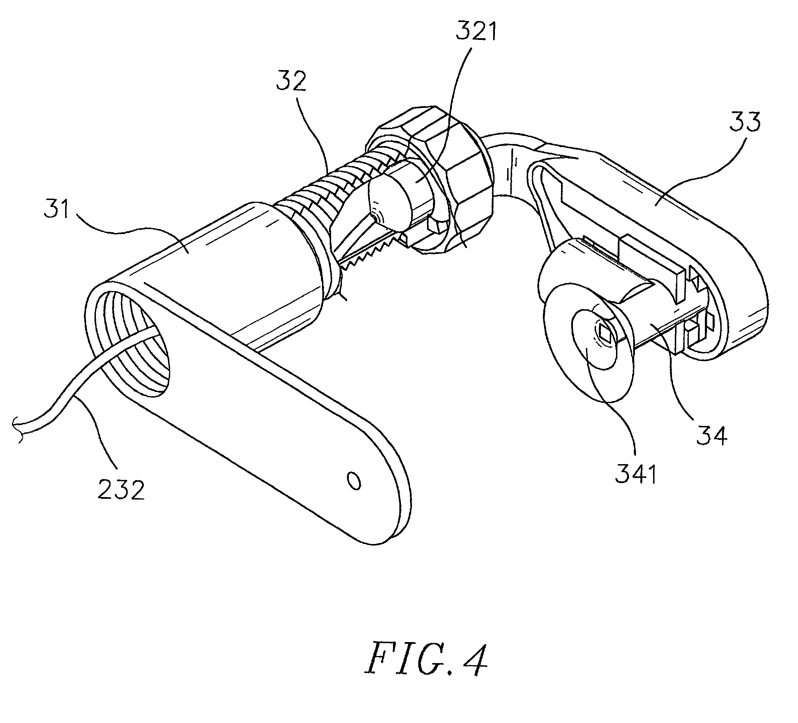

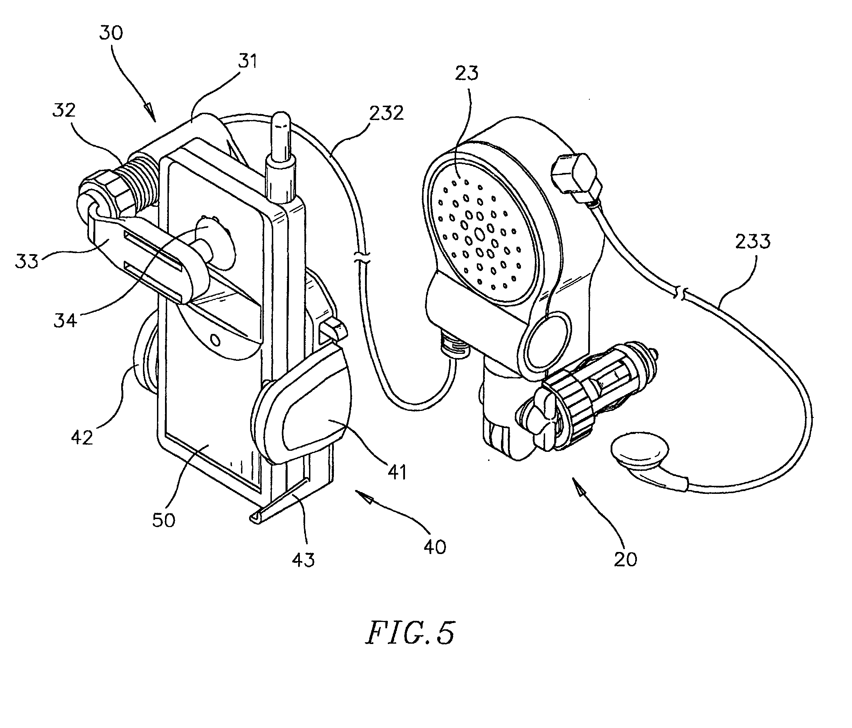

Fig. 1 is an exploded view of the present invention, a hand-free holding apparatus for mobile telephone set 10 consists of a power adapter 20, a voice gatherer 30, a holder 40 and a mobile telephone set 50, in which the power adapter 20 contains a pivot connector 21, an adjustable seat 22 and an audio power amplifier 23, the pivot connector 21 inserts in a power supply receptacle in car, the adjustable seat 22 serves to join the pivot connector 21 with the audio power amplifier 23, the pivot connector 21 can be adjusted to an optimum position in car by a knob 221 (as shown in Fig. 5); the audio power amplifier 23 has at least an additional power supply socket 231 provided for other electrical appliances (such as a refrigerator etc.) in car, the audio power amplifier 23 is equipped with a speaker and an electrical control board (not shown in Fig. 1), the audio power amplifier 23 is connected to the voice gatherer 30 through a cable 232, an exploded view of the voice gatherer 30 is shown in Fig. 2, it contains a fixed sleeve 31, an adjustable sleeve 32, an arm 33 and a cup set 34, the fixed sleeve 31 is threaded in its internal wall to engage with a male thread of the adjustable sleeve 32 which is made in halves and threaded in its external wall and contains a microphone 321 in it (as shown in Fig. 4), the microphone 321 is connected to the audio power amplifier 23 by a cable 232, an outer end of the adjustable sleeve 32 is joined rotatably with an arm 33, in the arm 33 there is an acoustic conuit 322 inserted, the acoustic conduit has one end connected to the microphone 321, and another end connected to the cup set 34, refer to Fig.3, in order to enhance the function of the cup set 34, it contains a small inner cut 341, when receiving voice, the outer cup 34 serves to isolate external noise and undesired sound wave, the small inner cup 341 serves to direct the received voice into the acoustic conduit 322 directly, meanwhile, if the cup set 34 in use fails to be placed completely against the telephone set 50, the small cup 341, then, is able to gather perfectly the received voice and transmit it to the microphone 321 through the acoustic conduit 322, then the audio signal from the microphone 321 is transmitted to the audio power amplifier 23 through the cable 232.

The received voice that is gathered by the cup 34 and effectively by the small cup 341 is transmitted to the microphone 321 through the acoustic conduit 322, however, the acoustic conduit which is made from a plastic material will generate vibration that will result in undesired sound wave when voice transmission through it, in order to inhibit the undesired sound wave, a spring 323 is inserted in the acoustic conduit 322 to give a clear voice.

Fig. 5 is a general assembly view of the present invention, refer to Fig. 1, in which the voice gatherer 30 is fixed on the holder by means of an arm of the fixed sleeve 31 (not show in Fig. 5), the holder 40 has a fixed jaw 41 arranged on one side, and a movable jaw 42 arranged on the opposite side, the movable jaw 42 serves to change a holding gap between it and the fixed jaw 41 for different types of telephone set 50, the holder 40 is arranged with a L shaped base 43 at bottom which serves to support the telephone set 50 when the telephone set 50 is hold by the holder 40; when the telephone set 50 is held by the holder 40 and the voice gatherer 30 is fixed on the holder 40 by means of the fixed sleeve 31, the cup set 34 overrides the telephone set 50 and is placed against the receiver of the telephone set, for the telephone set 50 can have various types and overall dimensions, the adjustable sleeve 32 can be screwed in/out to match different thickness of the telephone set 50. An optimum pressure from the cup set 34 can be applied on the telephone set 50 by the two threaded sleeves adjustment.

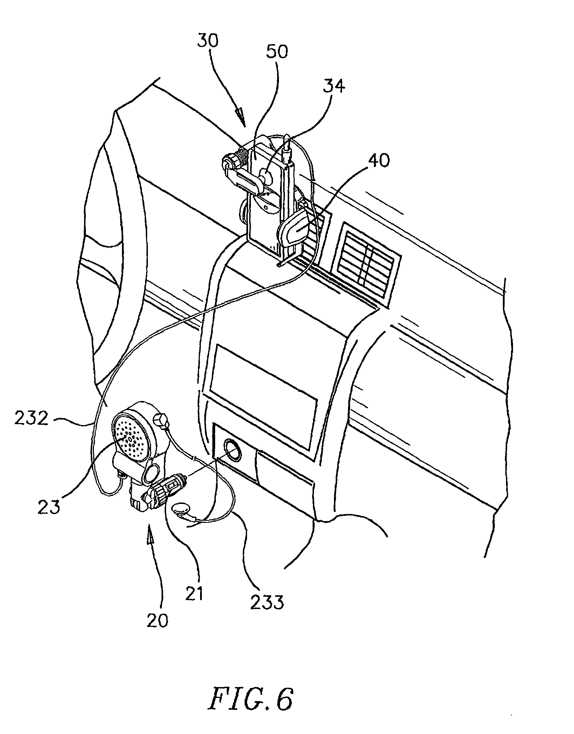

Fig. 6 is an example of embodiment of the invention, in which the holder 40 is provided with a hanger (not shown in Fig. 6) for hanging it at cool air outlet in car, meanwhile, the holder 40 has also the voice gatherer 30 fixed on it with the cup set 34 of the voice gatherer 30 placed against the receiver of the telephone set 50, and the power adapter 20 is inserted in a power supply receptacle in car by the pivot connector 21, an optimum position of the power adapter 20 may be obtained by the fastening knob 221, when the telephone set works, voice from it will be gathered by the cup set 34, then, the gathered voice will be transmitted to the microphone 321 through the acoustic conduit 322 (refer to Fig. 3), the audio signal will be sent to the audio power amplifier 23 through the cable 232, finally the voice from the telephone set 50 will be emitted by a speaker in the audio power amplifier 23, therefore, a driver will be able to make/take a telephone call by mans of the telephone set 50 with his hands free for driving his car, at the same time, the earphone 233 can be connected to the audio power amplifier 23 instead of the speaker for private receiving so that the driver can drive a car safely over making/taking a telephone call.

### Characteristics:

1. The present invention integrates a mobile telephone set, a holder, a voice gatherer and a power adapter into one, and makes it to be able to perform several functions.
2. A voice gatherer of the present invention includes a larger cup and a smaller cup for effective voice gathering.
3. The present invention gives a special design to inhibit undesired sound wave resulting in a clear voice.

The embodiment mentioned above is only a better example to embody the present invention, and can not restrict the range of embodiment of the present invention to it. Any modification or change made based on claims of the present invention shall be considered to be within coverage of the present invention.

## Claims

1. An improved hand-free holding apparatus for mobile telephone set (10) consisting of:
A holder (40) which has a movable jaw (42) and a fixed jaw (41), a telephone set (50) can be held by them by adjusting the movable jaw (42);
A voice gatherer (30) which contains a fixed sleeve (31), an adjustable sleeve (32), an arm (33) and a cup set (34), the fixed sleeve (31) has one end fixed in a proper position of the holder (40), and another end engaged with the adjustable sleeve (32) that is connected with the arm at its other end and has a microphone (321) in it, the microphone has an end connected with an acoustic conduit (322) which extends in the arm (33) and is connected with the cup set (34) by that voice is gathered;
The voice gatherer (30) is fixed on the holder (40) by the fixed sleeve (31), the adjustable sleeve (32) overrides the receiver of the telephone set (50) to make the cup set (34) that is connected with the arm (33) possible to be placed against the receiver of the telephone set (50), the gathered voice is transmitted to the microphone (321) through the acoustic conduit (322), and the signal from the microphone (321) is sent to the audio power amplifier (23) through a cable (232) to produce sound emission, **characterised in that** if further comprises a power adapter (20) which contains a pivot connector (21), an adjustable seat (22) and an audio power amplifier (23), the pivot connector (21) is connected with the audio power amplifier (23) by the adjustable seat (22), the pivot connector (21) is inserted in a power supply receptacle in car, and the auto power amplifier (23) is connected to a voice gatherer (30).

2. An improved hand-free holding apparatus for mobile telephone set according to Claim 1, in which the power adapter (20) has a knob (221) provided in the adjustable seat (22) for angle adjusting of rotation of the pivot connector (21).

3. An improved hand-free holding apparatus for mobile telephone set according to Claim 1 or 2, in which at least a power supply socket (321) is provided in the audio power amplifier (23) of the power adapter (20).

4. An improved hand-free holding apparatus for mobile telephone set according to one or more of the preceding claims, in which an earphone (233) can be connected to the audio power amplifier.

5. An improved hand-free holding apparatus for mobile telephone set according to one or more of the preceding claims, in which the fixed sleeve (31) is threaded in its internal wall.

6. An improved hand-free holding apparatus for mobile telephone set according to one or more of the preceding claims, in which the adjustable sleeve (32) is threaded in its external wall for engaging with the female thread in the fixed sleeve (31).

7. An improved hand-free holding apparatus for mobile telephone set according to one or more of the preceding claims, in which a spring (323) is inserted in the acoustic conduit (322).

8. An improved hand-free holding apparatus for mobile telephone set according to one or more of the preceding claims, in wich the cup set (34) includes a small cup (341) in it.

## Patentansprüche

1. Verbesserte Freisprech-Handapparathalterung für ein Mobiltelefon (10), bestehend aus:
einer Halterung (40), welche eine bewegbare Klaue (42) und eine festgelegte Klaue (41) aufweist, wobei ein Telefon bzw. Telefonset (50) durch diese durch ein Einstellen der bewegbaren Klaue (42) gehalten werden kann;
eine Stimmensammel- bzw. -aufnahmeeinrichtung (30), welche eine festgelegte Hülse (31), eine einstellbare Hülse (32), einen Arm (33) und einen Schalen- bzw. Bechersatz (34) beinhaltet, wobei die festgelegte Hülse (31) ein Ende in einer ordnungsgemäßen Position der Halterung (40) festgelegt und ein anderes Ende in Eingriff mit der einstellbaren Hülse (32) aufweist, welche mit dem Arm an ihrem anderen Ende verbunden ist und ein Mikrophon (321) darin aufweist, wobei das Mikrophon ein Ende mit einer akustischen Leitung (322) verbunden hat, welche sich in dem Arm (33) erstreckt und mit dem Schalensatz (34) verbunden ist, durch welchen die Stimme gesammelt bzw. aufgenommen wird;
wobei die Stimmenaufnahmeeinrichtung (30) an der Halterung (40) durch die festgelegte Hülse (31) festgelegt ist, wobei die einstellbare Hülse (32) den Empfänger des Telefons (50) überlagert, um den Schalensatz (34) auszubilden, welcher mit dem Arm (33) verbunden ist, um gegen den gegen den Empfänger des Telefons (50) ersetzt zu werden, wobei die aufgenommene Stimme zu dem Mikrophon (321) durch die akustische Leitung (322) übertragen wird, und das Signal von dem Mikrophon (321) zu der Audioleistungs-Verstärkungseinrichtung (23) durch ein Kabel (232) gesandt bzw. übertragen wird, um eine Tonabgabe zu erzeugen,
**dadurch gekennzeichnet, daß** sie weiters einen Leistungsadapter (20) umfasst, welcher einen Zapfen- bzw. Schwenkverbinder (21), einen einstellbaren Sitz (22) und eine Audioleistungs-Verstärkungseinrichtung (23) beinhaltet, wobei der Schwenkverbinder (21) mit der Audioleistungs-Verstärkungseinrichtung (23) durch den einstellbaren bzw. verstellbaren Sitz (22) verbunden ist, der Schwenkverbinder (21) in eine Leistungszufuhraufnahme in einem Fahrzeug eingesetzt ist und die Autoleistungs-Verstärkungseinrichtung (23) mit einer Stimmaufnahmeeinrichtung (30) verbunden ist.

2. Verbesserte Freisprech-Handapparathalterung für ein Mobiltelefon gemäß Anspruch 1, in welcher die Leistungseinstelleinrichtung (20) einen Knopf (221) aufweist, welcher in dem einstellbaren Sitz (22) für eine Winkeleinstellung einer Drehbewegung des Schwenkverbinders (21) vorgesehen ist.

3. Verbesserte Freisprech-Handapparathalterung für ein Mobiltelefon nach Anspruch 1 oder 2, in welcher wenigstens eine Leistungsversorgungsfassung bzw. -muffe (321) in der Audioleistungs-Verstärkungseinrichtung (23) des Leistungsadapters (20) vorgesehen ist.

4. Verbesserte Freisprech-Handapparathalterung für ein Mobiltelefon nach einem oder mehreren der vorangehenden Ansprüche, in welcher ein Ohrstück bzw. eine Hörkapsel (233) mit der Audioleistungs-Verstärkungseinrichtung verbunden werden kann.

5. Verbesserte Freisprech-Handapparathalterung für ein Mobiltelefon nach einem oder mehreren der vorangehenden Ansprüche, in welcher die festgelegte Hülse (31) in ihrer Innenwand mit einem Gewinde versehen ist.

6. Verbesserte Freisprech-Handapparathalterung für ein Mobiltelefon nach einem oder mehreren der vorangehenden Ansprüche, in welcher die einstellbare Hülse (32) in ihrer Außenwand mit einem Gewinde versehen ist, um mit dem aufnehmenden bzw. Innengewinde in der festgelegten Hülse (31) in Eingriff zu gelangen.

7. Verbesserte Freisprech-Handapparathalterung für ein Mobiltelefon nach einem oder mehreren der vorangehenden Ansprüche, in welcher eine Feder (323) in die akustische Leitung (322) eingesetzt ist.

8. Verbesserte Freisprech-Handapparathalterung für ein Mobiltelefon nach einem oder mehreren der vorangehenden Ansprüche, in welcher der Schalensatz (34) eine kleine Schale (341) darin enthält.

## Revendications

1. Dispositif support main libre amélioré pour téléphone mobile (10) comprenant :
un support (40) qui a une joue mobile (42) et une joue fixe (41), un appareil téléphonique (50) peut être soutenu par eux en réglant la joue mobile (42) ;
un collecteur de voix (30) qui contient un manchon fixe (31), un manchon réglable (32), un bras (33) et un ensemble formant coupelle (34), le manchon fixe (31) présente une extrémité fixée dans une position normale du support (40), et une autre extrémité en prise avec le manchon réglable (32) qui est relié au bras à son autre extrémité et présente un microphone (321) à l'intérieur du manchon réglable, le microphone présente une extrémité reliée à un conduit acoustique (322) qui s'étend dans le bras (33) et est relié à l'ensemble formant coupelle (34) par lequel la voix est collectée ;
le collecteur de voix (30) est fixé sur le support (40) par le manchon fixe (31), le manchon réglable (32) outrepasse l'écouteur de l'appareil téléphonique (50) pour faire en sorte qu'il soit possible de placer contre l'écouteur de l'appareil téléphonique (50) l'ensemble formant coupelle (34) qui est relié au bras (33), la voix collectée est transmise au microphone (321) à travers le conduit acoustique (322), et le signal provenant du microphone (321) est envoyé à l'amplificateur de puissance audio (23) à travers un câble (232) pour produire une émission sonore, **caractérisé en ce qu'**il comprend en outre un adaptateur de puissance (20) qui contient un connecteur à pivot (21), un support réglable (22) et un amplificateur de puissance audio (23), le connecteur à pivot (21) est relié à l'amplificateur de puissance audio (23) par le support réglable (22), le connecteur à pivot (21) est inséré dans une fiche d'alimentation électrique dans une voiture, et l'amplificateur de puissance automatique (23) est relié à un collecteur de voix (30).

2. Dispositif support main libre amélioré pour téléphone mobile selon la revendication 1, dans lequel l'adaptateur de puissance (20) présente un bouton (221) fourni dans le support réglable (22) pour régler l'angle de rotation du connecteur à pivot (21).

3. Dispositif support main libre amélioré pour téléphone mobile selon la revendication 1 ou 2, dans lequel au moins une douille d'alimentation (321) est fournie dans l'amplificateur de puissance audio (23) de l'adaptateur de puissance (20).

4. Dispositif support main libre amélioré pour téléphone mobile selon une ou plusieurs des revendications précédentes 1, dans lequel un écouteur (233) peut être relié à l'amplificateur de puissance audio.

5. Dispositif support main libre amélioré pour téléphone mobile selon une ou plusieurs des revendications précédentes, dans lequel le manchon fixe (31) est fileté au niveau de sa paroi interne.

6. Dispositif support main libre amélioré pour téléphone mobile selon une ou plusieurs des revendications précédentes 1, dans lequel le manchon réglable (32) est fileté au niveau de sa paroi externe pour être en prise avec le filetage intérieur du manchon fixe (31).

7. Dispositif support main libre amélioré pour téléphone mobile selon une ou plusieurs des revendications précédentes, dans lequel un ressort (323) est inséré dans le conduit acoustique (322).

8. Dispositif support main libre amélioré pour téléphone mobile selon une ou plusieurs des revendications précédentes, dans lequel l'ensemble formant coupelle (34) comprend une petite coupe (341) à l'intérieur.
